# EUROPÄISCHE PATENTSCHRIFT

(11) **EP 0 935 436 B1**
(45) Veröffentlichungstag und Bekanntmachung des Hinweises auf die Patenterteilung: **26.04.2000**
(21) Anmeldenummer: 97912210.8
(22) Anmeldetag: 22.10.1997
(51) Int. Cl.: A47J 43/046

(54) **KÜCHENMASCHINE**
KITCHEN APPLIANCE
APPAREIL ELECTROMENAGER

(30) Priorität: 04.11.1996 DE 19645309
(43) Veröffentlichungstag der Anmeldung: 18.08.1999
(73) Patentinhaber: Braun GmbH, Kronberg (DE)
(72) Erfinder: BÖRGER, Georg, D-61449 Steinbach (DE); KAMPRATH, Karl-Heinz, D-65207 Wiesbaden (DE); MÖTHRATH, Georg, D-63571 Gelnhausen (DE)
(86) Internationale Anmeldenummer: EP9705824
(87) Internationale Veröffentlichungsnummer: WO9819585

(56) Entgegenhaltungen:
- DE-A- 3 408 693
- DE-A- 4 115 471
- US-A- 4 277 181
- US-A- 4 922 464
- US-A- 5 273 358

## Beschreibung

Die vorliegende Erfindung bezieht sich auf eine Küchenmaschine, mit Antriebsmotor, einem vom Antriebsmotor angetriebenen Arbeitswerkzeug zum Verarbeiten von Nahrungsmitteln, einem die Küchenmaschine umgebenden Gehäuse und einer Kühlvorrichtung mit einem Kühlluftstrom für den Antriebsmotor, wobei die Kühlvorrichtung einen Luftleitkanal aufweist, in dem der Antriebsmotor angeordnet ist, wobei im Gehäuse Lufteintritts- und Luftaustrittsöffnungen vorhanden sind, zwischen denen der Luftleitkanal ausgebildet ist.

Mit Küchenmaschinen werden sehr unterschiedliche Aufgaben der täglichen Küchenarbeit erledigt, beispielsweise Kneten, Rühren und Schlagen, Schneiden, Raspeln, Reiben, Mischen, um die wichtigsten zu nennen. Für diese Zwecke werden unter anderem universell einsetzbare Küchenmaschinen verwendet, bei denen es sich um Standgeräte handelt.

Abhängig von den Nahrungsmitteln, die beispielsweise zerkleinert oder geknetet werden müssen, ist ein hoher Kraftaufwand erforderlich, mit der Folge, daß solche Küchengeräte leistungsstarke Antriebsmotoren erfordern, die auch im Dauereinsatz störungsfrei arbeiten. Die Antriebsmotoren dieser Küchenmaschinen, die von dem Gehäuse der Küchenmaschine umschlossen sind, erzeugen, gerade unter Last, große Wärmemengen, die aus dem Gerät abgeführt werden müssen. Aus diesem Grund ist mit dem Antriebsmotor antriebsmäßig ein Lüfterrad verbunden, das eine Luftzirkulation, insbesondere um den Antriebsmotor herum, während des Betriebs des Geräts aufrechterhält, um mit Luft, über Lufteintrittsöffnungen angesaugt, den Antriebsmotor zu kühlen.

Üblicherweise wird das Lüfterrad unmittelbar auf der Antriebswelle des Antriebsmotors befestigt (siehe die US-A-5 273 358). Eine weitere Küchenmaschine mit einer solchen Anordnung des Lüfterrads auf der Antriebswelle des Antriebsmotors ist aus der US-A-4,309,631 bekannt. Das darin beschriebene Küchengerät ist ein Küchenmixer, wobei der Antriebsmotor mit seiner Antriebswelle horizontal verlaufend angeordnet ist. Die Antriebskraft wird über ein Winkelgetriebe auf eine senkrecht stehende Welle übertragen, an deren freiem Ende ein in einen Behälter einsetzbares Werkzeug aufsetzbar ist.

Um ein unmittelbar auf der Welle aufgesetztes, gesondertes Lüfterrad zu vermeiden, wird gemäß der DE-A-34 08 693 ein Rad, über das ein Riemen geführt ist, als Lüfterrad ausgebildet. Hierbei handelt es sich vorzugsweise nicht um diejenige Riemenscheibe, die unmittelbar auf die Antriebswelle des Antriebsmotors aufgesetzt ist, sondern um die Riemenscheibe, die mit der Welle, auf die ein Arbeitswerkzeug aufgesetzt wird, verbunden ist und diese antreibt, da diese Riemenscheibe üblicherweise einen gegenüber der auf der Antriebswelle des Antriebsmotors aufgesetzten Riemenscheibe einen größeren Durchmesser besitzt.

Kühlmaßnahmen mittels Lüfterräder, ob diese nun unmittelbar auf der Antriebswelle des Antriebsmotors aufgesetzt sind oder mit Riemenantriebsscheiben verbunden sind oder einen Teil von diesen bilden, sind dahingehend nachteilig, daß sie der durch den Antriebsmotor zu bewegenden Masse zusätzliches Gewicht hinzufügen. Wenn sie nicht exakt gearbeitet sind, rufen die Lüfterräder eine Unwucht hervor, mit der Folge, daß das Gerät vibriert und während des Betriebs der Maschine Geräusche verursacht.

Aus der DE-A-41 15 471 ist weiterhin eine Küchenmaschine bekannt, bei der der Antriebsmotor durch einen separaten Lüftermotor mit Gebläserad gekühlt wird. Diese Anordnung ist aber verhältnismäßig teuer.

Der vorliegenden Erfindung liegt nun die Aufgabe zugrunde, eine Küchenmaschine, die einen elektrischen Antriebsmotor aufweist, zu schaffen, bei dem die Probleme nach dem Stand der Technik, die mit dem Einsatz eines Lüfterrads verbunden sind, beseitigt werden, bei dem allerdings dennoch eine effektive Kühlung des Antriebsmotors bei ruhigem Lauf erreichbar ist.

Gelöst wird die Aufgabe, ausgehend von einer Küchenmaschine der eingangs angegebenen Art, durch die Merkmale des Patentanspruchs 1.

Durch das turmartige Gehäuse, das den Antriebsmotor mit geringem und nahezu konstantem Abstand umgibt, und durch die Lufteintritts- und Luftaustrittsöffnungen, die im wesentlichen an gegenüberliegenden Enden des turmartigen Gehäuses angeordnet sind, wird, ähnlich einem Kamin, bei Erwärmung des Antriebsmotors auch ohne Gebläse eine verstärkte Luftströmung entlang des Antriebsmotors von unten nach oben erzielt, um die kontinuierlich von dem Antriebsmotor abgegebene Wärme abzuführen. Um eine effektive Luftströmung zu erzielen, ist es wesentlich, daß der Luftleitkanal, der zwischen der Außenseite des elektrischen Antriebsmotors und dem rohrförmigen Gehäuse verbleibt, so groß dimensioniert ist, daß infolge der aufsteigenden Warmluft, ähnlich einem Kamineffekt, eine ausreichende Luftströmung von unten nach oben erzielt werden kann. Es hat sich gezeigt, daß mit einem solchen rohrförmigen Gehäuseteil, das den elektrischen Antriebsmotor umgibt, der Antriebsmotor eine ausreichende Kühlung, auch unter hoher Belastung, erfährt, wenn die Austrittsöffnungen für die erwärmte Luft im wesentlichen oberhalb des oberen Bereichs des Antriebsmotors am Gehäuse ausgebildet sind, während die Lufteintrittsöffnungen im wesentlichen im unteren Bereich des Antriebsmotors am Gehäuse verlaufen.

Wenn der Luftleitkanal und der Antriebsmotor horizontal und die Lufteinlaß- und Luftauslaßöffnungen übereinander am Luftleitkanal verlaufen, ergibt sich bereits eine gute Aufwärtsströmung zur Kühlung des Antriebsbsmotors (Anspruch 2). Allerdings sollten hierbei die Lufteinlaßöffnungen im wesentlichen unterhalb und die Luftauslaßöffnungen oberhalb des Antriebsmotors am Luftleitkanal ausgebildet sein.

Um die Luftführung mit einem effektiven Wärmetransport entlang des Antriebsmotors zu unterstützen, muß in der Grundstellung des Gerätes der Luftleitkanal senkrecht zur Abstellfläche der Küchenmaschine verlaufen (Anspruch 3). Dabei können die Lufteintrittsöffnungen im wesentlichen unterhalb des Antriebsmotors, beispielsweise in der Bodenplatte des Geräts, vorgesehen werden. Um eine schlanke Gestalt des rohrförmigen Gehäuses zu erzielen, ist die Antriebsachse des Antriebsmotors so auszurichten, daß sie etwa parallel zu der Längsachse des rohrförmigen oder turmartigen Gehäuses verläuft; hierbei ist es von Vorteil, wenn ein relativ schlanker Antriebsmotor in das rohrförmige Gehäuse eingesetzt wird, so daß, in Richtung der Luftströmung und der Achse des Antriebsmotors gesehen, eine lange Wärmeaustauschzone zwischen dem Luftstrom und der Oberfläche des Motorgehäuses erzielt wird.

Eine besonders einfache Ausgestaltung des Luftleitkanals wird durch die Merkmale des Patentanspruchs 4 erzielt. Dabei wird der Kanaldurchlaß von dem Ringraum zwischen Antriebsmotor und Gehäuse gebildet.
Damit um den gesamten Antriebsmotor herum, d.h. in radialer Richtung zu der Antriebsachse gesehen, eine Zirkulation der Luftströmung erfolgt, wird gemäß Anspruch 5 der Luftleitkanal als Rohrabschnitt ausgebildet, der zwischen der Außenseite des Antriebsmotors und der Innenwand des turmartigen Gehäuses ausgebildet ist. Wie bereits zuvor erwähnt wurde, kann hierbei der Querschnitt des Ringraums so dimensioniert werden, daß sich ein definierter Konvektionsluftstrom von den Lufteintrittsöffnungen entlang des Rohrabschnitts zu den Luftaustrittsöffnungen ergibt. Hierbei ist die Form des Luftleitkanals unabhängig von der Form der Innenwand des Gehäuses.

Um die Luftströmung in Richtung der Längserstreckung des rohrförmigen Gehäuses noch weiter zu unterstützen, sollte, gemäß Anspruch 6, oberhalb des Antriebsmotors ein freier Raum vorhanden sein, d.h. das rohrförmige Gehäuse sollte über die Längserstreckung des Antriebsmotors hinaus verlängert sein, in den die erwärmte Luft strömt, um von dort aus den Luftaustrittsöffnungen auszutreten. Der Raum oberhalb des Antriebsmotors dient dabei als Sammelraum für die warme Luft, von wo sie dann den Austrittsöffnungen durch Leiteinrichtungen oder ähnliche Führungswege zugeführt wird, an denen sie dann schließlich ins Freie austritt. Der freie Raum dient also auch zur Verbesserung der Luftströmung aus dem Gehäuse. Gleichzeitig kann die Wand des freien Raumes auch zusätzliche Wärmeenergie speichern und dann infolge von Wärmestrahlung nach außen abgeben. Der Antriebsmotor kann in Richtung der Achse gesehen unterschiedliche Positionen in dem turmartigen Gehäuse einnehmen, es sollte allerdings bevorzugt die Länge des turmartigen Gehäuses, so auf den Antriebsmotor abgestimmt werden, daß der Antriebsmotor nur einen Teil des turmartigen Gehäuses ausfüllt.

Um einen optimalen Luftstrom in das turmartige Gehäuse einzuführen und eine gleichmäßige reibungsarme Luftströmung über die gesamte Außenfläche des Antriebsmotors herum zu erreichen, werden bevorzugt gemäß Anspruch 8 die Lufteintrittsöffnungen im wesentlichen senkrecht unterhalb des Antriebsmotors in der Grundplatte angeordnet; diese Öffnungen können auch in Form von radialen (Anspruch 7) und axialen Öffnungen in Bezug auf die Achse des Antriebsmotors kombiniert werden. Mit einer solchen Lochkonfiguration wird gleichmäßig Luft um den Antriebsmotor, von allen Seiten diesen umströmend, zugeführt. Die Öffnungen können aber sowohl senkrecht unterhalb des Antriebsmotors wie auch seitlich davon in der Grundplatte ausgebildet sein. Dabei kann die Lufteintrittsöffnung auch in einem höheren Bereich als das untere Ende des Antriebsmotors an der Grundplatte ausgebildet sein, so daß dann der Luftleitkanal um das Maß der höhergelegenen Stelle bis zur Höhe der Lufteintrittsöffnung im Gerätesockel verlängert ist. Durch die Kaminwirkung wird auch so kalte Luft von der höhergelegenen Lufteintrittsöffnung angesaugt.

Um einen starken Konvektionsluftstrom zu erzeugen, kann es, gemäß Anspruch 9, bevorzugt sein, das Gehäuse senkrecht zur Achse des Antriebsmotors bzw. senkrecht zur Achse des Gehäuses mit einem asymmetrischen Querschnitt zu versehen, so daß, in Längsrichtung des rohrförmigen Gehäuses gesehen, ausbuchtungsartige Eckräume um den Antriebsmotor herum verteilt gebildet werden. Hiermit werden um den Antriebsmotor herum verteilt einzelne exzentrische Raumabschnitte für die Luftströmung gebildet, so daß in diesem Bereich mehr Warmluft aufgenommen werden kann. Durch die exzentrischen Raumabschnitte entsteht auch eine größere Abstrahlfläche am Gehäuse, ohne daß die Strömung durch die vergrößerten Eckräume wesentlich verschlechtert wird.

Geeignete, asymmetrische Querschnitte sind, gemäß Anspruch 10, ellipsen-, rautenförmige oder ovale Querschnitte. Das Gehäuse sollte aber auch in Verbindung mit einem symmetrischen Querschnitt so dimensioniert sein, daß um den gesamten Antriebsmotor herum dennoch ein freier kreisringförmiger Ringraum verbleibt (Anspruch 11).

Durch die Merkmale des Anspruchs 12 wird eine optimale Kühlung des Antriebsmotors sowohl durch Konvektion wie Strahlung erreicht. Letztere wird durch eine besonders große Außenfläche des den Antriebsmotor umgebenden mittleren Gehäuseteils erreicht, wenn dieses im Querschnitt vorzugsweise oval ausgebildet ist. Eine derartige Form läßt sich bei glatter Oberfläche noch gut herstellen. Material des Gehäuses ist vorzugsweise Kunststoff. Es könnte aber auch zur besseren Wärmespeicherung und Wärmeabgabe Metall verwendet werden.

Weitere Einzelheiten und Merkmale der Erfindung ergeben sich aus der Beschreibung eines Ausführungsbeispiels anhand der Zeichnung. In der Zeichnung zeigt
- Fig. 1: eine vordere Seitenansicht einer Küchenmaschine mit einem rohrförmigen oder turmartigen Gehäuse, das sich an der hinteren Längsseite des Gehäuses nach oben erstreckt,
- Fig. 2: einen Schnitt entlang der Schnittlinie II-II in Fig. 1,
- Fig. 3: eine Draufsicht auf das Küchengerät der Fig. 1 von oben aus Richtung des Sichtpfeils III in Fig. 1, und
- Fig. 4: einen Schnitt entlang der Schnittlinie IV-IV in Fig. 3.

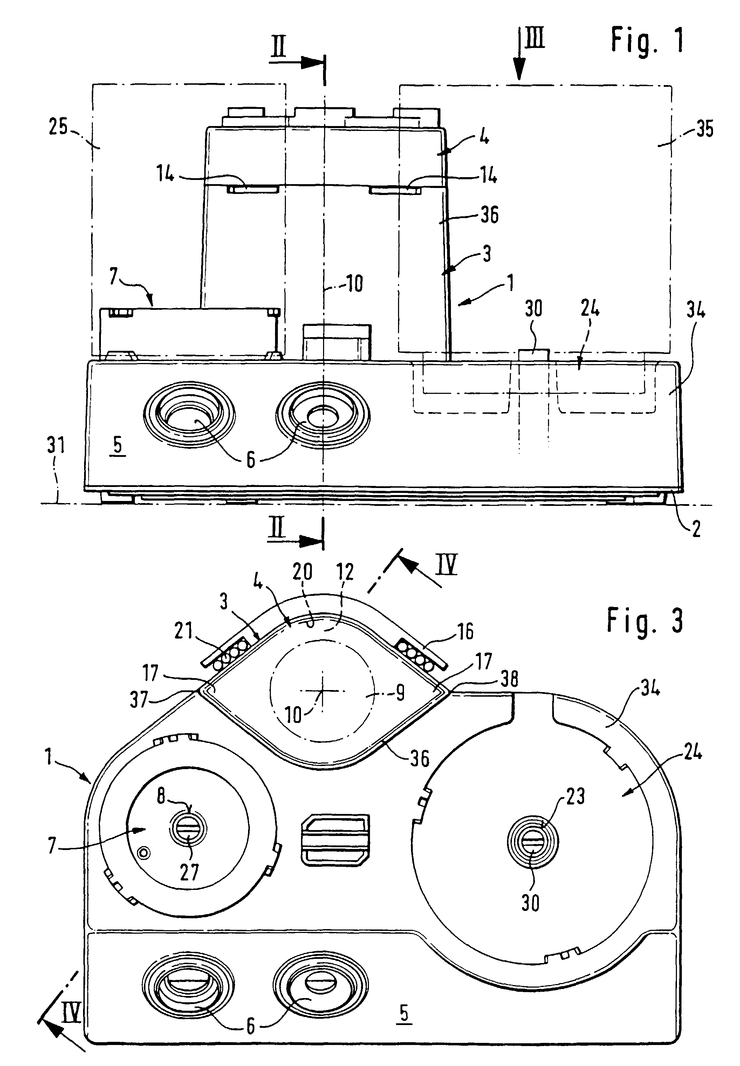

Die Küchenmaschine, wie sie in den Figuren 1 bis 4 dargestellt ist, weist ein Gehäuse 1 mit einer auf einer Abstellfläche 31 abgestellten Grundplatte 2 sowie einem mittleren 3 und einem oberen Gehäuseteil 4 auf, wobei letzteres von einer Abschlußplatte 4 gebildet wird. An dem Gehäuse 1 ist eine vordere, abgeschrägte Bedienungsfläche 5 mit zwei Mulden 6 zur Aufnahme von nicht dargestellten Bedienungselementen in Form von Schaltknöpfen zur Einschaltung und Drehzahlregelung eines Antriebsmotors 9 vorgesehen.

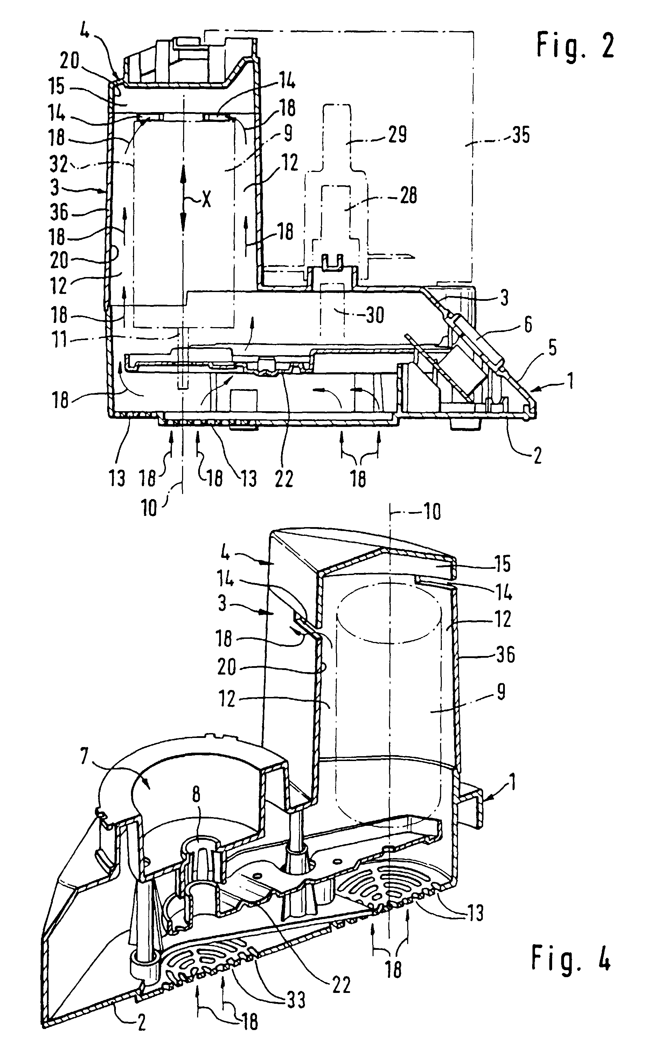

Es ist anzumerken, daß die Küchenmaschine in den einzelnen Figuren im wesentlichen nur mit ihrem Gehäuse 1 dargestellt ist, d.h. ohne die mechanischen und/oder elektrischen Teile, wobei allerdings die Antriebseinheit in Form des elektrischen Antriebsmotors 9 angedeutet dargestellt ist, der auf einer ein Getriebe (nicht dargestellt) tragenden Grundplatte 22 aus Metall befestigt ist, die sich wiederum an der Bodenplatte 2 abstützt. Das Getriebe dient zum Antrieb von Antriebswellen 27, 30 (Figuren 2 und 3), die aus Öffnungen 8, 23 aus dem Basisteil 34 des mittleren Gehäuseteils 3 herausragen (nicht dargestellt).

Die Küchenmaschine ist mit zwei Aufnahmeeinheiten 7, 24 versehen. Im Bereich jeder Aufnahmeeinheit 7, 24 kann ein Arbeitsbehälter 25, 35 (Figuren 2 und 1 angedeutet), wie beispielsweise ein Rühr- oder Mischbehälter, aufgesetzt zentriert und befestigt werden, der sich über eine im Arbeitsbehälter 25, 35 drehbar ausgebildete Steckwelle 28 mit der Antriebswelle 27, 30 verbindet, so daß wiederum über die Steckwelle 28 ein in dem Arbeitsbehälter 25, 35 an der Steckwelle 28 aufsetzbares Werkzeug 29, wie beispielsweise ein Schneidmesser oder ein Rührteil, angetrieben werden kann. Die beiden Aufnahmeeinheiten 7, 24 sind so dimensioniert, daß sie jeweils zwei unterschiedlich große Arbeitsbehälter 25, 35 aufnehmen, gegebenenfalls auch unter unterschiedlichen Drehzahlen des dazugehörigen Werkzeugs 29, wobei aber der im Durchmesser kleinere Arbeitsbehälter 25 und der im Durchmesser größere Arbeitsbehälter 35 in Fig. 1 gestrichelt dargestellt sind. Der größere Arbeitsbehälter 35 wird in der Aufnahmeeinheit 24 zentriert, gehalten und mit der zweiten Antriebswelle 30 gekuppelt.

Der Antrieb der durch die Öffnungen 8, 23 hindurchführenden Antriebswellen 27, 30 erfolgt über den Antriebsmotor 9, wie er in den Figuren 2, 3 und 4 schematisch angedeutet zu sehen ist. Der Antriebsmotor 9 verläuft mit seiner Antriebsachse 10, die durch die strichpunktierte Linie in Fig. 2 angedeutet ist, senkrecht zu der Grundplatte 2 in Richtung X. An der Antriebswelle 11 des Antriebsmotors 9 ist eine nicht dargestellte Riemenscheibe befestigt, die mit einem oder zwei Antriebsriemen (nicht dargestellt) in Eingriff steht, der über weitere Riemenscheiben, die den Antriebswellen 27, 30 zugeordnet sind, geführt ist, so daß unter Drehung des Antriebsmotors 9 die jeweiligen Antriebswellen 27, 30 mit einem Unter- bzw. Übersetzungsverhältnis entsprechend der Größe der Riemenscheiben gedreht werden. Die Riemenscheiben und Riemen bilden das Getriebe der Küchenmaschine.

Der Antriebsmotor 9 ist ein lüfterradloser Antriebsmotor, d.h es ist kein Lüfterrad vorgesehen, um dem Antriebsmotor 9 Kühlluft zuzuführen. Auch ist keiner Antriebsscheibe oder sonst einem drehenden Teil ein Lüfterrad zugeordnet. Der Antriebsmotor 9 wird vorzugsweise durch einen Konvektionsluftstrom (dargestellt durch die Pfeile 18 in Fig. 2) gekühlt, der an der Außenseite des Antriebsmotors 9, über einen Luftleitkanal 12, vorbeigeführt wird, der zwischen der Außenseite 32 des Antriebsmotors 9 und der Innenwand 20 des rohrförmigen Gehäuseteils 3, 4 vorhanden ist. Unmittelbar unterhalb des Antriebsmotors 9 in der Grundplatte 2 sind Lufteintrittsöffnungen 13 vorgesehen. Diese Lufteintrittsöffnungen 13 sind nach Fig. 4 als Langlöcher ausgebildet, die auf Kreisen zentrisch um die Antriebsachse 10 des Antriebsmotors 9 verlaufend gleichmäßig verteilt sind. Unterhalb der Aufnahmeeinheit 7 sind gleichgestaltete Lufteintrittsöffnungen 33 ausgebildet, um möglichst viel Kühlluft ansaugen zu können und um gegebenenfalls auch noch das Getriebe (nicht dargestellt) zu kühlen.

Am Übergang zwischen dem Abschlußteil 4 und dem mittleren Gehäuseteil 3 sind relativ groß dimensionierte Luftaustrittsöffnungen 14 in Form von seitlich austretenden Schlitzen vorgesehen, die einen Austritt für eine in dem Gehäuse 1 erzeugte Luftströmung gemäß der Pfeile 18 nach den Figuren 2 und 4 bilden.

Der im wesentlichen rohrförmige Abschnitt 36 des mittleren Gehäuseteils 3 ist im Querschnitt weitgehendst oval ausgebildet, so daß sich Ausbuchtungen 17 in den gegenüberliegenden Randbereichen bilden. An der Außenseite des rohrförmigen Abschnitts 36 ist eine Kabelaufwicklungseinrichtung 16 für ein elektrisches Anschlußkabel 21 vorgesehen.

Im Betrieb des Geräts erwärmt sich der Antriebsmotor 9 mit der Folge, daß auch die Luft in dem Luftleitkanal 12 erwärmt wird. Die erwärmte Luft steigt infolge von Konvektion in dem turmartigen oder rohrförmigen Abschnitt 36 auf, sammelt sich in dem Raum 15 oberhalb des Antriebsmotors 9, um aus den Luftaustrittsöffnungen 14 auszutreten, wie dies durch die Pfeile 18 gemäß den Figuren 2 und 4 dargestellt ist.

Aufgrund des Luftleitkanals 12 wird in dem Gehäuse 3 eine Konvektionsluftströmung von den Lufteintrittsöffnungen 13, 33 zu den Luftaustrittsöffnungen 14 gemäß der Strömungspfeile 18 hin aufrechterhalten, so daß der Antriebsmotor 9 ausreichend mit frischer, kühlender Luft umspült wird. Dabei sind die Luftaustrittsöffnungen 14 im Querschnitt so dimensioniert, daß die anfallende warme Luft ausreichend schnell austreten kann. Die Luftaustrittsöffnungen 14 sind dabei so am Gehäuse 1 angeordnet, daß von Hand nicht in das Gerät eingegriffen werden kann.

Aufgrund der vorstehend geschilderten Konvektionsluftströmung, die insbesondere durch den rohrförmigen bzw. turmartigen Abschnitt 36 und den hierdurch gebildeten Luftleitkanal 12 zwischen Antriebsmotor 9 und der Innenwand 20 hervorgerufen wird, ist es nicht erforderlich, einen zwangsgeführten Luftstrom um den Antriebsmotor 9 herum mittels eines allgemein bekannten Lüfterrads aufrechtzuerhalten. Dabei ist die Querschnittsfläche des rohrförmigen Abschnitts 36 nur so groß bemessen, daß auch durch Wärmestrahlung ein im Luftleitkanal 12 sich bildender Wärmeanteil nach außen über das Gehäuseteil 3 abgestrahlt wird.

Wie gut in der Fig. 3 zu erkennen ist, ist das Gehäuseteil 3, abweichend von der kreisförmigen Querschnittsform des Antriebsmotors 9, rautenförmig bzw. oval mit Ecken 37, 38 ausgebildet, so daß in den Ecken 37, 38 zusätzlicher Stauraum in Form von Ausbuchtungen 17 entsteht, der warme Luft speichern kann und durch den die nach außen eintretende Strömung infolge der Schachtwirkung mehr Wärme zu den Luftaustrittsöffnungen 14 leitet.

## Patentansprüche

1. Küchenmaschine, mit Antriebsmotor (9), einem vom Antriebsmotor (9) angetriebenen Arbeitswerkzeug (29) zum Verarbeiten von Nahrungsmitteln, einem die Küchenmaschine umgebenden Gehäuse (1) und einer Kühlvorrichtung (12, 13, 14, 33) mit einem Kühlluftstrom (18) für den Antriebsmotor (9),
**dadurch gekennzeichnet,**
daß die Kühlvorrichtung (12, 13, 14) einen Luftleitkanal (12) aufweist, in dem der Antriebsmotor (9) angeordnet ist, daß im Gehäuse (1) Lufteintritts- und Luftaustrittsöffnungen (13, 33, 14) vorhanden sind, zwischen denen der Luftleitkanal (12) ausgebildet ist und daß der Kühlluftstrom (18) im Luftleitkanal durch dessen Schachtwirkung alleine erzielt wird.

2. Küchenmaschine nach Anspruch 1,
**dadurch gekennzeichnet,**
daß der Antriebsmotor (9) und der Luftleitkanal (12) horizontal verlaufen.

3. Küchenmaschine nach Anspruch 1,
**dadurch gekennzeichnet,**
daß der Antriebsmotor (9) und der Luftleitkanal (12) im wesentlichen senkrecht zur Abstellfläche (31) der Küchenmaschine verlaufen.

4. Küchenmaschine nach Anspruch 2 oder 3,
**dadurch gekennzeichnet,**
daß der Luftleitkanal (12) durch einen Ringraum (12) gebildet ist, der durch die Wand des Gehäuses (1) der Küchenmaschine selbst und durch die Außenwand (32) des Antriebsmotors (9) entsteht.

5. Küchenmaschine nach Anspruch 2 oder 3,
**dadurch gekennzeichnet,**
daß der Luftleitkanal (12) von einem den Antriebsmotor (9) umgebenden Rohrabschnitt gebildet wird, der vom Gehäuse (1) umgeben ist und der mit den Lufteintritts- und Luftaustrittsöffnungen (13, 33; 14) des Gehäuses (1) verbunden ist.

6. Küchenmaschine nach Anspruch 1,
**dadurch gekennzeichnet,**
daß sich zwischen dem Antriebsmotor (9) und den Luftaustrittsöffnungen (14) ein freier Raum (15) befindet.

7. Küchenmaschine nach Anspruch 1,
**dadurch gekennzeichnet,**
daß die Eintrittsöffnungen (13), radial zu der Achse (10) des Antriebsmotors (9) verlaufend, in einer Grundplatte (2) angeordnet sind.

8. Küchenmaschine nach Anspruch 3,
**dadurch gekennzeichnet,**
daß die Eintrittsöffnungen (13) im wesentlichen senkrecht unterhalb des Antriebsmotors (9) in einer Grundplatte (2) angeordnet sind.

9. Küchenmaschine nach Anspruch 3,
**dadurch gekennzeichnet,**
daß das Gehäuse (1) senkrecht zu der Achse (10) des Antriebsmotors (9) gesehen, einen asymmetrischen Querschnitt aufweist.

10. Küchenmaschine nach Anspruch 9,
**dadurch gekennzeichnet,**
daß der Querschnitt ellipsen-, rautenförmig oder oval ist.

11. Küchenmaschine nach Anspruch 1,
**dadurch gekennzeichnet,**
daß die Innenwandung eines Gehäuseteils (3) der Außenkontur des Antriebsmotors (9) angepaßt ist.

12. Küchenmaschine nach Anspruch 1,
**dadurch gekennzeichnet,**
daß die Oberfläche eines Gehäuseteils (3) so groß bemessen ist, daß von der im Betrieb der Küchenmaschine vom Gehäuseteil (3) durch die Erwärmung des Antriebsmotors (9) aufgenommenen Wärme so viel an die Umgebung abgestrahlt wird, daß diese in Verbindung mit der durch die Lüftungsöffnung (14) austretenden Warmluft (18) ausreicht, den Antriebsmotor (9) im Dauerbetrieb ausreichend zu kühlen.

## Claims

1. A kitchen appliance, comprising a drive motor (9), a processing tool (29) driven by the drive motor (9) for the processing of food materials, a housing (1) surrounding the kitchen appliance, and a cooling arrangement (12, 13, 14, 33) producing a cooling air current (18) for the drive motor (9),
**characterized in that** the cooling arrangement (12, 13, 14) includes an air directing channel (12) in which the drive motor (9) is disposed, that air inlet and air outlet apertures (13, 33, 14) are provided in the housing (1) between which the air directing channel (12) is formed, and that the cooling air current (18) in the air directing channel is produced solely by said channel's stack effect.

2. The kitchen appliance as claimed in claim 1,
**characterized in that** the drive motor (9) and the air directing channel (12) extend horizontally.

3. The kitchen appliance as claimed in claim 1,
**characterized in that** the drive motor (9) and the air directing channel (12) extend essentially perpendicularly to the support surface (31) of the kitchen appliance.

4. The kitchen appliance as claimed in claim 2 or 3,
**characterized in that** the air directing channel (12) is obtained by an annular chamber (12) formed between the wall of the housing (1) of the kitchen appliance itself and the outer wall (32) of the drive motor (9).

5. The kitchen appliance as claimed in claim 2 or 3,
**characterized in that** the air directing channel (12) is formed by a tubular section which surrounds the drive motor (9), is surrounded by the housing (1) and is in communication with the air inlet and air outlet apertures (13, 33; 14) of the housing (1).

6. The kitchen appliance as claimed in claim 1,
**characterized in that** a free space (15) is present between the drive motor (9) and the air outlet apertures (14).

7. The kitchen appliance as claimed in claim 1,
**characterized in that** the inlet apertures (13) are disposed in a base plate (2) so as to extend radially to the axis (10) of the drive motor (9).

8. The kitchen appliance as claimed in claim 3,
**characterized in that** the inlet apertures (13) are disposed essentially vertically beneath the drive motor (9) in a base plate (2).

9. The kitchen appliance as claimed in claim 3,
**characterized in that** the housing (1) has an asymmetrical cross section when viewed normal to the axis (10) of the drive motor (9).

10. The kitchen appliance as claimed in claim 9,
**characterized in that** the cross section is elliptical, rhomboidal or oval.

11. The kitchen appliance as claimed in claim 1,
**characterized in that** the inner wall of a housing portion (3) is conformed to the outer contour of the drive motor (9) .

12. The kitchen appliance as claimed in claim 1,
**characterized in that** the surface of a housing portion (3) is dimensioned so large that of the heat taken up by the housing portion (3) as a result of the heating of the drive motor (9) during operation of the kitchen appliance, such an amount is radiated off to the environment that this amount, in combination with the warm air (18) exiting through the outlet aperture (14), is sufficient to cool the drive motor (9) adequately when in continuous duty.

## Revendications

1. Appareil ménager comportant un moteur d'entraînement (9), un outil de travail (29) entraîné par le moteur d'entraînement (9) et servant à traiter des denrées alimentaires, un carter (1) qui entoure l'appareil ménager, et un dispositif de refroidissement (12,13,14,33) comportant un courant d'air de refroidissement (18) pour le moteur d'entraînement (9), caractérisé en ce
que le dispositif de refroidissement (12,13,14) comporte un canal (12) de guidage de l'air, dans lequel est disposé le moteur d'entraînement (9), que dans le carter (1) sont aménagées des ouvertures (13,33,14) d'entrée et de sortie de l'air, entre lesquelles le canal (12) de guidage de l'air est formé et que le courant d'air de refroidissement (18) dans le canal de guidage de l'air est obtenu uniquement au moyen de l'effet de cheminée de ce canal.

2. Appareil ménager selon la revendication 1, caractérisé en ce
que le moteur d'entraînement (9) et le canal (12) de guidage de l'air s'étendent horizontalement.

3. Appareil ménager selon la revendication 1, caractérisé en ce
que le moteur d'entraînement (9) et le canal (12) de guidage de l'air s'étendent sensiblement perpendiculairement à la surface de rangement (31) de l'appareil ménager.

4. Appareil ménager selon la revendication 2 ou 3, caractérisé en ce
que le canal (12) de guidage de l'air est formé par un espace annulaire (12), qui est défini par la paroi du carter (1) de l'appareil ménager lui-même et par la paroi extérieure (32) du moteur d'entraînement (9).

5. Appareil ménager selon la revendication 2 ou 3, caractérisé en ce
que le canal (12) de guidage de l'air est formé par une partie de tube, qui entoure le moteur d'entraînement (9) et qui est entourée par le carter (1) et est reliée aux ouvertures (13,33;14) d'entrée et de sortie de l'air du carter (1).

6. Appareil ménager selon la revendication 1, caractérisé en ce
qu'un espace libre (15) est situé entre le moteur d'entraînement (9) et les ouvertures (14) de sortie de l'air.

7. Appareil ménager selon la revendication 1, caractérisé en ce
que les ouvertures d'entrée (13) sont disposées dans une plaque de base (2), de manière à s'étendre radialement par rapport à l'axe (10) du moteur d'entraînement (9).

8. Appareil ménager selon la revendication 3, caractérisé en ce
que les ouvertures d'entrée (13) sont formées essentiellement verticalement au-dessous du moteur d'entraînement (9) dans une plaque de base (2).

9. Appareil ménager selon la revendication 3, caractérisé en ce
que, vu perpendiculairement à l'axe (10) du moteur d'entraînement (9), le carter (1) possède une section transversale dissymétrique.

10. Appareil ménager selon la revendication 9, caractérisé en ce
que la section transversale possède une forme elliptique, en losange ou ovale.

11. Appareil ménager selon la revendication 1, caractérisé en ce que
la paroi intérieure d'une partie (3) du carter est adaptée au contour extérieur du moteur d'entraînement (9).

12. Appareil ménager selon la revendication 1, caractérisé en ce
que la surface d'une partie (3) du carter est dimensionnée avec des dimensions importantes de telle sorte qu'une partie de la chaleur absorbée lors du fonctionnement de l'appareil ménager, par la partie (3) du carter sous l'effet de l'échauffement du moteur d'entraînement (9), est rayonnée dans l'environnement, partie qui est juste suffisante, en liaison avec l'air chaud (18) qui sort par l'ouverture d'aération (14), pour refroidir d'une manière suffisante le moteur d'entraînement (9) pendant le fonctionnement permanent.
